# EUROPEAN PATENT APPLICATION

(11) **EP 0 608 654 A1**
(43) Date of publication of application: **03.08.1994**
(21) Application number: 93480193.7
(22) Date of filing: 19.11.1993
(51) Int. Cl.: H04M 3/54, H04M 3/50

(54) **Telephone directing method and apparatus**

(30) Priority: 30.12.1992 US 998274; 30.12.1992 US 998197
(71) Applicant: International Business Machines Corporation, Armonk, N.Y. 10504 (US)
(72) Inventor: Fitzpatrick, Gregory P., Ft. Worth, Texas 76137 (US); Johnson, William J., Flower Mound, Texas 75028 (US); Williams, Marvin L., Lewisville, Texas 75067 (US); Warren, William E., Richland Hills, Texas 76118 (US)
(74) Representative: de Pena, Alain

(57) **Abstract**

A method and data processing system are disclosed for processing telephone calls. In one embodiment, the invention, in response to the designation of a telephone number, searches a calendar database for information describing the scheduled location of the party associated with the telephone number. At the caller's option, the invention may direct the call to the scheduled location or telephone number of the party or may inform the caller of the scheduled location or telephone number of the party. The invention may search a directory database for a telephone number associated with the information describing the scheduled location of the party if the information describing the scheduled location of the party called does not include a telephone number.

## Description

### BACKGROUND OF THE INVENTION

### Field of the Invention

The present invention relates to telephone systems and in particular to a telephone system that, after designation of a party to be called, can inform a caller of the whereabouts of the party called and connect the caller to the party called.

### Description of the Related Art

A data processing system that includes an electronic telephone dialer allows a person, called a user, using the data processing system to select an entry in an electronic telephone directory resident in the data processing system. The system will, in response, place a telephone call to the telephone number associated with the directory entry. However, the party called may be away from the location of the telephone number. Another party may answer the telephone call, or an automatic telephone answering service may respond to the incoming telephone call. However, neither may satisfy a caller who prefers to speak directly to the party called.

A telephone answering system responds to an incoming telephone call if the call is not answered by a person. Such systems may play a prerecorded message or record a message from the caller. Some such systems may offer the caller additional choices, such as the ability to access individual extensions by dialing extension numbers or individual persons or departments by spelling the person's or department's name on the caller's telephone keypad. Telephone answering systems may also offer a caller, through the use of the caller's keypad, the ability to connect to a backup person in the absence of the party called.

However, a caller may still prefer to speak directly to the party to be called, or callee. Thus, many telephone systems allow a party to program the system to forward to another telephone number calls directed to the party's telephone number. However, a party with multiple engagements away from his telephone may have to separately route his incoming calls to a telephone at each of the locations he expects to visit. Furthermore, such programming of the telephone, and particularly the repeated re-programming of the telephone, represent an inconvenience to the party.

Many data processing systems include electronic calendars. Such calendars maintain calendar entries that contain information describing the scheduled location of the calendar's owner. This information describing the scheduled location may include the names of persons the calendar owner expects to meet with, the locations of such meetings, and an external telephone number or internal telephone extension at the location of such meetings. Individual calendar entries may also have beginning times and ending times or durations on individual day or days. Therefore, a telephone system is desired that can access and use electronic calendar information describing the scheduled location of a designated party to inform a caller of or direct a call to the scheduled location.

### SUMMARY OF THE INVENTION

In accordance with the present invention, a method and data processing system are disclosed for processing telephone calls. In one embodiment, the invention, in response to the designation of a telephone number, searches a calendar database for information describing the scheduled location of the party associated with the telephone number. At the caller's option, the invention may direct the call to the scheduled location or telephone number of the party or may inform the caller of the scheduled location or telephone number of the party. The invention may search a directory database for a telephone number associated with the information describing the scheduled location of the party if the information describing the scheduled location of the party called does not include a telephone number.

### BRIEF DESCRIPTION OF THE DRAWINGS

Figure 1 is a block diagram of an apparatus used in performing the method of a first, preferred embodiment of the present invention and forming a part of the apparatus of the first embodiment of the present invention;
Figures 2a and 2b are a high level logic flowchart illustrating the method of the first embodiment of the present invention;
Figure 3 is a block diagram of an apparatus used in performing the method of a second embodiment of the present invention and forming a part of the apparatus of the second embodiment of the present invention; and
Figures 4 and 5 are a high level logic flowchart illustrating the method of the second embodiment of the present invention.

### DETAILED DESCRIPTION OF THE PREFERRED EMBODIMENTS

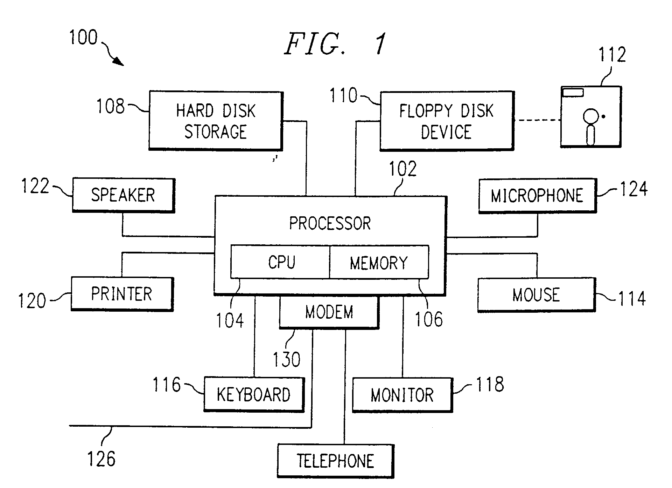

With reference now to the figures, and in particular with reference to Figure 1, there is shown, in block diagram form, an apparatus according to the present invention. The apparatus includes a data processing system 100. The data processing system 100 includes a processor 102, which includes a central processing unit (CPU) 104 and memory 106. Additional memory, such as a hard disk file storage 108 and a floppy disk device 110, may be connected to the processor 102. Floppy disk device 110 may receive a removable diskette 112 which may have computer program code recorded thereon that implements portions of the present invention in the data processing system 100. The data processing system 100 also includes user interface hardware, such as a mouse 114, a keyboard 116 and a microphone 124, for allowing user input to the processor 102. The data processing system 100 also includes display hardware, such as a monochrome or color display monitor 118 and a monochrome or color display printer 120, for presenting visual information to the user. The data processing system may also include a speaker 122 for presenting audio information to the user. Connected to the data processing system 100, preferably through a modem 130, is a telephone line 126 and a telephone 128.

The data processing system 100 of Figure 1 is configured and equipped to serve as a telephone answering system for incoming calls on telephone line 126 that are not answered by a live person using, for example, telephone 128. A person, called a user, operating the data processing system 100 or the telephone 128 can record a message in the data processing system 100. If an incoming telephone call arrives on telephone line 126 and is not answered by a person, the data processing system 100 may answer the call and play the prerecorded message to the caller. The data processing system 100 may offer the caller the option to record a voice message that the caller wishes to leave.

In accordance with the present invention, the data processing system 100 is provided with an electronic calendar function and also with a telephone directory function. The calendar function allows the user or other persons to record calendar entries to the user's calendar for various times throughout the day. Each entry may include information describing the user's scheduled location. This information describing the user's scheduled location may include the names of persons the user expects to meet with, the locations of such meetings, and an external telephone number or internal telephone extension at the location of such meetings. The directory includes information such as the names, addresses and external telephone numbers or internal telephone extension numbers of persons. The data processing system 100 is also equipped with a text-to-speech synthesizer.

In accordance with the present invention, when a person does not answer an incoming call on telephone line 126 and the data processing system 100 answers the incoming call instead, the data processing system 100 offers the caller the option of accessing the user's calendar. By accessing the calendar of the party called, who is the user, the data processing system is able to search for information describing the scheduled location of the user at the time of the call. At the caller's option, the data processing system will retrieve the user's current calendar entry, convert the entry into speech using the text-to-speech synthesizer and recite the calendar entry to the caller over the telephone line 126. Further, also at the caller's option, the data processing system may retrieve from the directory a telephone number or extension associated with a name or an address appearing in the calendar entry. The data processing system may also modify any internal extension numbers for use by external telephones. Additionally, in a telephone system equipped for forwarding incoming calls, the data processing system may offer the caller the option of being forwarded to a telephone number retrieved by the data processing system.

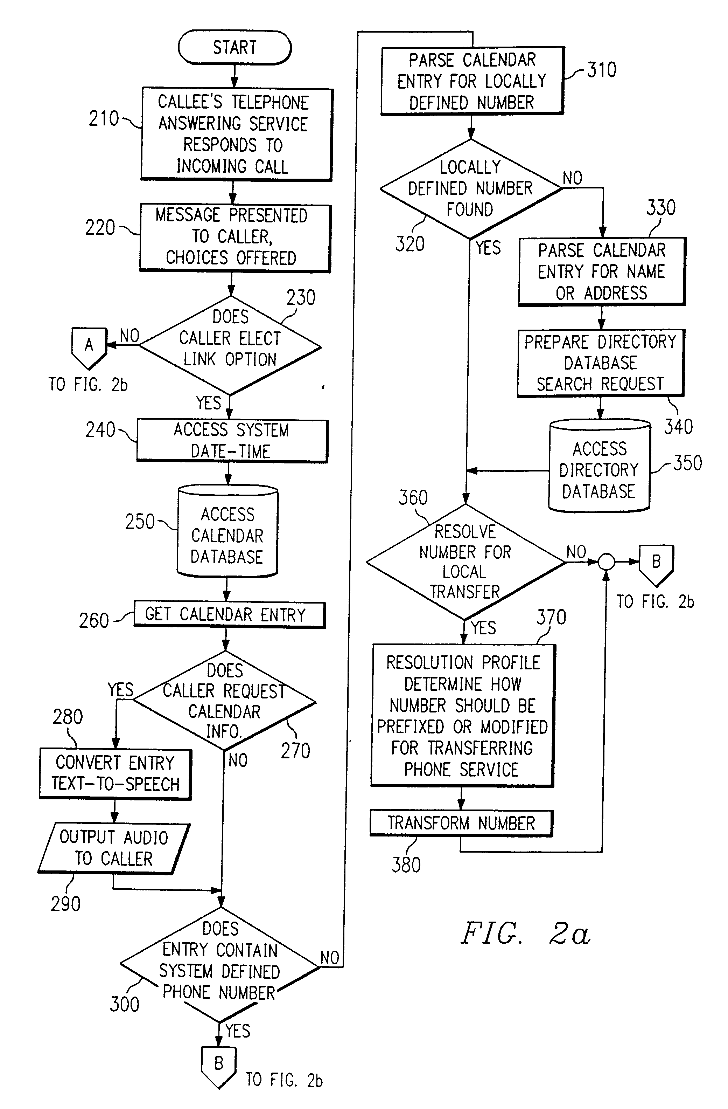

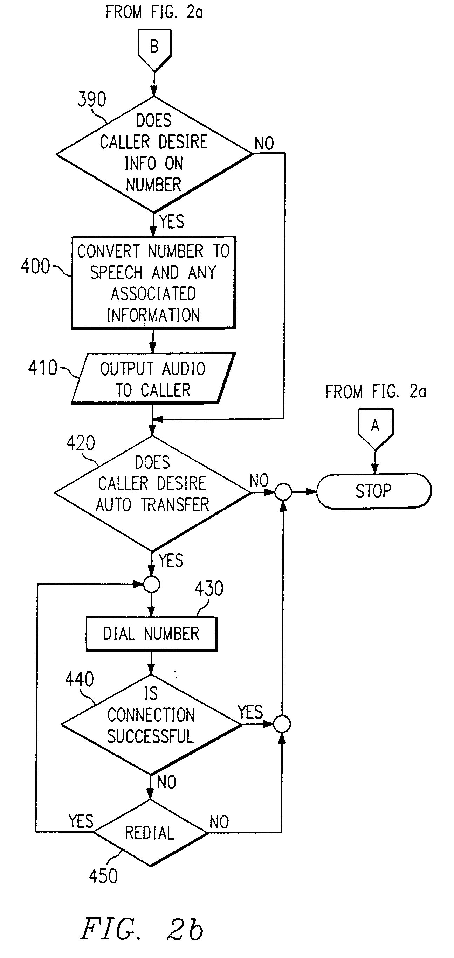

With reference now to Figures 2a and 2b, there is depicted a high level flowchart which illustrates the method of the first embodiment of the present invention. The process begins at block 210 when the telephone answering service of the data processing system responds to an incoming but otherwise unanswered telephone call arriving on telephone line 126. After answering the call, the process proceeds to block 220 and the data processing system may present a prerecorded message to the caller and may offer choices, such as those choices described above, from which the caller may select, as through use of the caller's telephone keypad. In accordance with this invention, one of these choices offers the option of accessing or linking to the user's calendar. The process then proceeds to block 230 and determines whether the caller has elected the option of accessing or linking to the user's calendar. If no, the process terminates.

If the caller has elected to link to the user's calendar, the process proceeds from block 230 to block 240 and accesses the current system date and time. The process then proceeds to block 250 and accesses the calendar data base maintained by the data processing system, which contains the user's electronic calendar. The process then proceeds to block 260 and gets the user's calendar entry for the current date and time. The process then proceeds to block 270 and allows the caller to request calendar information. If calendar information is requested, the process proceeds to block 280 and converts the user's current calendar entry to speech using the text-to-speech synthesizer of the data processing system. The process then proceeds to block 290 and outputs this audio speech to the caller using the telephone line 126. Alternatively, this information may be output to a display panel of the caller's telephone if it is equipped to display visual characters. The process then proceeds to block 300.

Returning to block 270, if the caller does not request calendar information, the process proceeds directly from block 270 to block 300. In block 300, the data processing system determines whether the current calendar entry contains a complete telephone number. Completeness of the telephone number is defined by the system, for example, a full seven digit telephone number or a full ten digit area code and telephone number. The complete telephone number may be contained in a dedicated telephone number field of the user's electronic calendar entry. If no such number is contained in the user's current calendar entry, the process proceeds from block 300 to block 310.

In block 310, the process parses the current calendar entry for a locally defined telephone number. Such a number may include, for example, a local extension, a private network number, or fewer than the customary seven or ten digits. The process then proceeds to block 320, in which it is determined whether a locally defined number was found in block 310. If yes, the process proceeds from block 320 to block 360.

Returning to block 320, if no locally defined number was found, the process proceeds from block 320 to block 330 and parses the current calendar entry for a name or an address or location. The process then proceeds to block 340 and uses any name, address or location found in block 330 to prepare a directory data base search request. The process then proceeds to block 350 and accesses the directory data base and performs the search using the search request prepared in block 340, returning any telephone number associated with the names, addresses or locations in the search request. If a number is retrieved in block 350, the process then proceeds to block 360. If no number is retrieved in block 350, error processing, not shown, advises the caller and the process terminates.

In block 360, the process determines whether any telephone number returned needs to be resolved into a sufficient telephone number for local forwarding of the call. As discussed above, a telephone number located by parsing the current calendar entry or returned by the directory database may be other than a conventional seven digit or ten digit number. If resolution is needed, the process proceeds to block 370 and accesses a resolution profile which specifies how a number should be prefixed or modified. For example, an internal five digit extension may require the addition of a two digit prefix to form a conventional seven digit phone number. A private network number may require conversion to a public network area code and exchange. The process then proceeds from block 370 to block 380 and performs the actual transformation of the number into an acceptable telephone number. The process then proceeds to block 390 of Figure 2b.

Returning to block 360, if resolution of the telephone number is not required, the process proceeds directly from block 360 to block 390 of Figure 2b.

Turning now to Figure 2b, in block 390, the caller may select whether he wishes to receive information on the telephone number. If yes, the process proceeds from block 390 to block 400 and converts the telephone number and any associated information, such as a name or address associated with the telephone number, from text to speech using the text-to-speech synthesizer of the data processing system 100. The process then proceeds to block 410 and outputs the speech as audio to the caller over the telephone line 126. Alternatively, the information may be displayed on a visual display panel of the caller's telephone, if it is so equipped. The process then proceeds to block 420.

Returning to block 390, if the caller does not wish to receive information on the telephone number, the process proceeds directly to block 420, where the caller may specify whether he wishes his call forwarded. If no, the process terminates. If yes, the process proceeds from block 420 to block 430 and forwards the call to the appropriate telephone number. The process then proceeds to block 440 for a determination of whether the connection is successful. If the connection is successful, the process terminates. If the connection is not successful, the process proceeds to block 450 and allows the caller to specify whether to re-dial. If yes, the process returns to block 430, described above. If no, the process terminates.

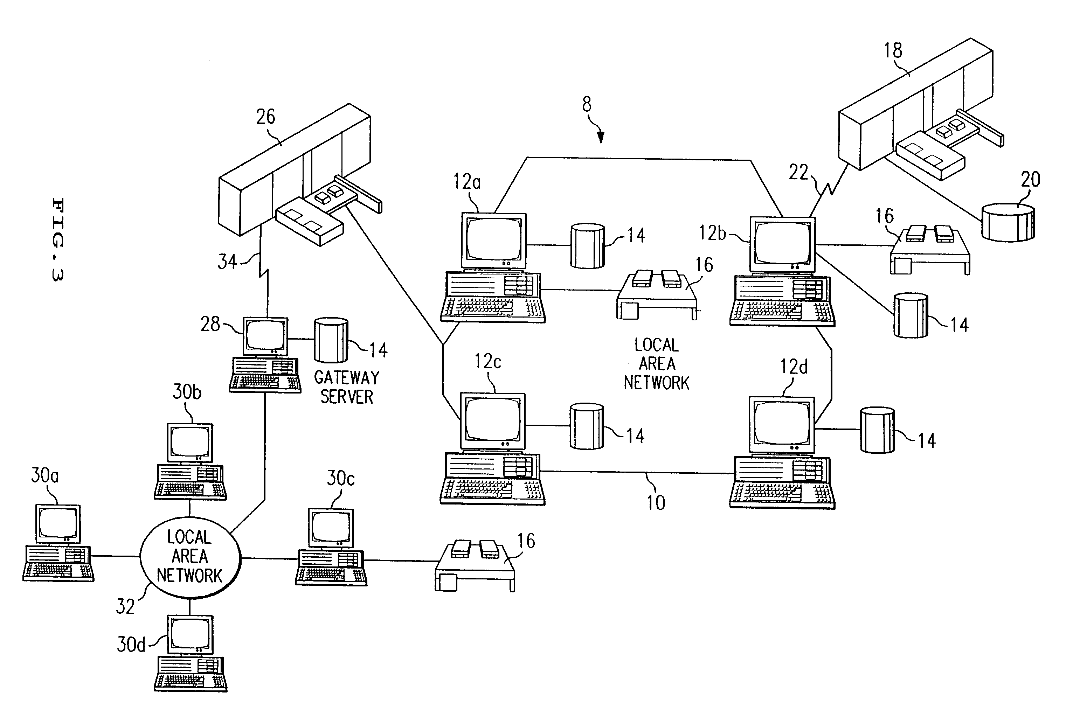

With reference now to Figure 3, there is shown a pictorial representation of a data processing system 8 which may be utilized to implement the method and apparatus of a second embodiment of the present invention. As may be seen, data processing system 8 may include a plurality of networks, such as local area networks 10 and 32, each of which preferably includes a plurality of individual computers 12a, 12b, 12c and 12d; and 30a, 30b, 30c and 30d respectively. Alternatively, a plurality of intelligent workstations coupled to a host processor may be utilized for each such network.

Each individual computer may be coupled to a storage device 14 and/or a printer/output device 16. One or more such storage devices 14 may be utilized to store various documents or software applications, which may be accessed by a client user within the data processing system 8.

Still referring to Figure 3, data processing system 8 may also include multiple mainframe computers, such as mainframe computer 18, which may be preferably coupled to local area network 10 by means of communications link 22. Mainframe computer 18 may also be coupled to a storage device 20 which may serve as remote storage for local area network 10 and may also be coupled by a communications controller 26 and communications link 34 to a gateway server 28. Gateway server 28 is preferably an individual computer or intelligent workstation which serves to link local area network 32 to local area network 10.

Still referring to Figure 3, the data processing system preferably also includes an electronic calendar system. The electronic calendar system preferably allows individual users of the data processing system to maintain individual electronic calendars. Individual electronic calendars may also be maintained for physical assets such as conference rooms. Each individual electronic calendar will accept individual electronic calendar events. Each such event may include a start time, a stop time, and/or a duration of the event on a particular day or days. Each such electronic calendar event may also include information describing the scheduled location of the event. Information describing the scheduled location may include the names of persons that the individual user expects to meet with and the location of such scheduled meetings. In the case of a physical asset, such as a conference room, the information may include the names of persons expected to attend an event scheduled in the conference room. The information may also include an external telephone number or internal telephone extension or a physical address of any person whose name is included in the information.

The data processing system also preferably includes an electronic directory. The directory preferably includes information such as the names, address, and external telephone numbers or internal telephone extension numbers of various persons, including individual users of the data processing system and also other persons who are not users of the data processing system.

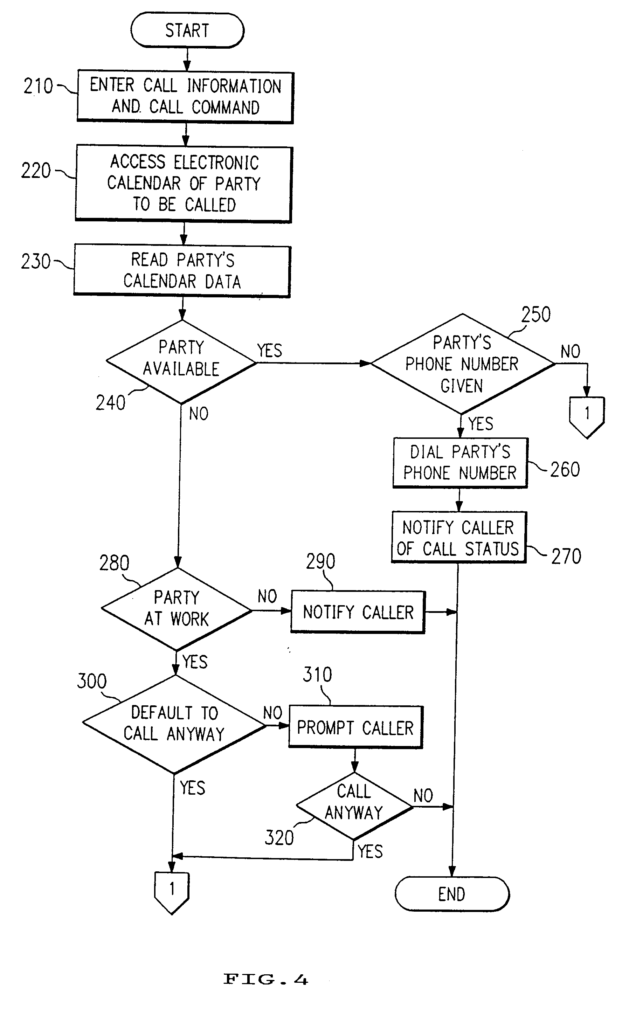

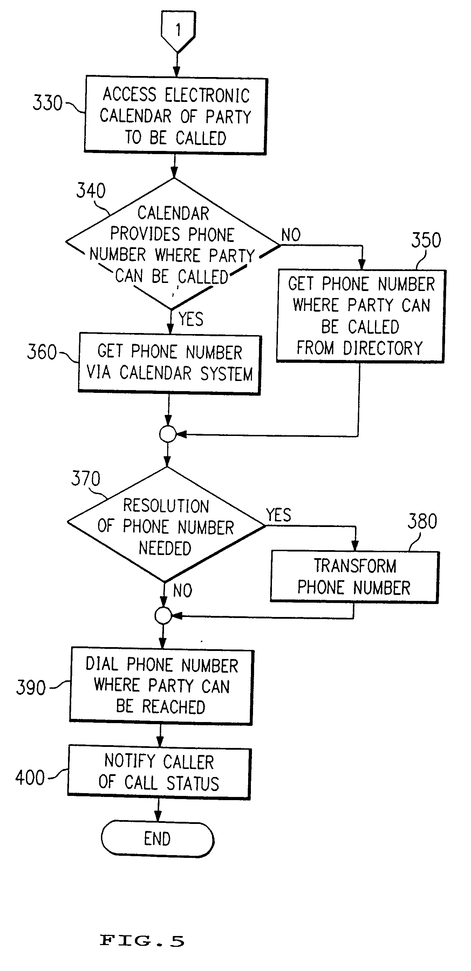

With reference now to Figures 4 and 5, there is depicted a high level flowchart which illustrates the method of a preferred embodiment of the present invention. The process begins at block 510 in which the user enters call information and a CALL command. The information and command may be entered by the user in different ways. For example, the user may type "CALL partyname" on a command line, where "partyname" may be a name, a userid, an address or a telephone number. Alternatively, the user may select a party's name from a list of names appearing in the electronic directory and enter a CALL command. The CALL command may be entered by, for example, selection of a push button with a pointing device, use of a dedicated function key or the command line. Additionally, call information may be entered from an electronic calendar application. For example, while viewing his own calendar, a user may select a calendar event and enter the CALL command. Alternatively, while viewing another party's calendar, either another person or a physical asset such as a conference room, the user may select a calendar event and enter the CALL command. The data processing system identifies the party to be called from the information found in the calendar entry describing the scheduled location of the event. This information may be a person's name or userid or some other specific information, such as a telephone number or office address, that would permit the identification of a specific person.

In block 510, the system will, as a default, assume that the user desires to place a call to the present location of the party; that is, the location of the party at the present time. However, the user may override this default to the present time, either by directly entering a different date and/or time, as on the command line, or by selecting a calendar event that is scheduled to occur at a different time.

The process next proceeds from block 510 to block 520 and accesses the electronic calendar of the party to be called. The identity of the party to be called is determined from the information directly entered by the user or information contained in the calendar event or directory entry designated by the user which describes the scheduled location of the party to be called.

The process next proceeds to block 530 and determines whether the electronic calendar of the party to be called includes a scheduled event at the time specified by the user. If present, the information describing the scheduled location of the party is read.

The process then proceeds from block 530 to block 540 and determines from the information read in block 530 whether the party is scheduled to be available at his customary location, such as his office. During normal business hours, this scheduled availability of the party to be called would ordinarily be determined by the absence of a calendar entry at the appropriate time. If it is determined that the party is scheduled to be available, the process proceeds from block 540 to block 550 and determines whether the party's telephone number is included in the call information, as would, for example, be the case if the party's identity were selected from an electronic directory. If yes, the process proceeds from block 550 to block 560 and dials the party's telephone number. The process then proceeds to block 570 and notifies the caller of the status of the call. The process then terminates.

Returning to block 550, if the party's customary telephone number is not included in the call information, the process proceeds from block 550 to block 630 of Figure 5, to be discussed below.

Returning to block 540, if it was determined that the party is not scheduled to be available at his customary location, the process proceeds from block 540 to block 580 and determines whether the party is scheduled to be at work. During a work day, a calendar event such as vacation or holiday would permit a determination that the party is not scheduled to be at work. After working hours, the absence of a calendar event permits a determination that the party is not scheduled to be at work. If it is determined that the party is not scheduled to be at work, the process proceeds from block 580 to block 590 and notifies the caller that the party is not scheduled to be at work. The process then terminates.

Returning to block 580, if the process determines that the party is scheduled to be at work, the process proceeds to block 600 and determines what system default has been set. If the system default, in response to a CALL command, is to place the call to a party's scheduled location, the process proceeds to block 630 of Figure 5, to be described below. If the system does not default to place the call, the process proceeds from block 600 to block 610 and prompts the caller whether he wishes to place the call to the party's scheduled location. The process then proceeds to block 620 to determine the caller's response. If the caller elects not to place the call anyway, the process terminates. If the caller elects to place the call, the process proceeds to block 630 of Figure 5.

Turning next to Figure 5, the process arrives at block 630 from either block 550, block 600 or block 620 of Figure 4, as described above. In block 630, the process accesses the electronic calendar of the party to be called. The process then proceeds to block 640 and determines whether the calendar information provides a phone number of the scheduled location of the party. If yes, the process proceeds to block 660 and gets the telephone number from the calendar system. The process then proceeds to block 670. Returning to block 640, if the process determines that the electronic calendar information accessed in block 630 does not provide a telephone number of the scheduled location of the party, the process proceeds from block 640 to block 650 and uses a person's name or address in the calendar event to get, from the electronic directory, a telephone number for the scheduled location of the party. If the meeting is in a conference room, and a name is also given, the invention will default to searching for the telephone number of the conference room. The process then proceeds from block 650 to block 670.

In block 670 the process examines the telephone number to determine whether resolution of the telephone number is needed. For example, a private network telephone number may be provided when an outside line is needed or an outside line telephone number may be provided when a private network telephone number is needed. Similarly, incomplete telephone numbers or mere extensions may be provided, which require additional numbers to conform to, for example, a conventional seven digit or ten digit telephone number. If it is determined in block 670 that resolution of the telephone number is needed, the process proceeds from block 670 to block 680 and transforms the telephone number into the required form. The process then proceeds from block 680 to block 690.

Returning to block 670, if it is determined that resolution of the telephone number is not needed, the process proceeds directly from block 670 to block 690. In block 690 the process dials the telephone number of the scheduled location of the party. The process then proceeds from block 690 to block 700 and notifies the caller of the status of the call. The process then terminates.

## Claims

1. A method, performed in a data processing system, for processing incoming telephone calls, said method characterized in that it comprises the steps of:
in response to the receipt of an incoming telephone call, searching a calendar database for information describing the scheduled location of the party called,
informing the caller of the scheduled location of the party called.
forwarding the incoming call to the scheduled location of the party called, and

2. The method of claim 1, wherein the information describing the scheduled location of the party called includes a telephone number of the scheduled location of the party called.

3. The method of claim 2, further comprising the step of :
searching a directory database for a telephone number associated with the information describing the scheduled location of the party called.

4. A data processing system for processing incoming telephone calls, comprising:
means for answering an incoming telephone call;
said system being characterized in that it further comprises :
means for searching, in response to the receipt of an incoming telephone call, a calendar database for information describing the scheduled location of the party called.
means for informing the caller of the scheduled location of the party called.
means for forwarding the incoming call to the scheduled location of the party called.

5. The data processing system of claim 4, wherein the information describing the scheduled location of the party called includes a telephone number of the scheduled location of the party called.

6. The data processing system of claim 5, further including :
means for searching a directory database for a telephone number associated with the information describing the scheduled location of the party called.
